# EUROPEAN PATENT APPLICATION

(11) **EP 1 905 314 A1**
(43) Date of publication of application: **02.04.2008**
(21) Application number: 07112944.9
(22) Date of filing: 23.07.2007
(51) Int. Cl.: A23L 3/015, B01D 11/02, B65B 25/00

(54) **Pasteurization of pre-packaged food using supercritical C02**

(30) Priority: 29.09.2006 US 827490 P; 25.05.2007 US 753937
(71) Applicant: L'AIR LIQUIDE, Société Anonyme pour l'Etude et l'Exploitation des Procédés Georges Claude, 75007 Paris (FR)
(72) Inventor: Yuan, James (Tsz-Ching), Naperville, IL 60565 (US); Rasanayagam, Vasuhi, Chicago, IL 60616 (US)
(74) Representative: Mellul-Bendelac, Sylvie Lisette

(57) **Abstract**

A method to pasteurize pre-packaged food at, or near room temperature, using supercritical carbon dioxide is provided. Carbonation may also be introduced simultaneous to the pasteurization.

## Description

There is a need in the food packaging industry for a pasteurizable pouch or container. The term "pasteurizable" as used herein is intended to refer to packaging material structurally capable of withstanding exposure to pasteurizing conditions while containing a food product. It is common practice in the food industry to apply a pasteurization process to certain food products after packaging, In order to reduce the bacterial load of such products, thereby improving product freshness and extending the shelf life.

It is the very nature of the pasteurizations process that creates this need. Typically the food product is placed in the bag, evacuating the bag, hermetically sealing the bag, and then immersing the bag in a hot water bath at a temperature, and for a duration, sufficient for pasteurization. Often such high temperatures can adversely effect the quality, texture, flavor, appearance, or mouth feel of foods.

The present invention is directed to method to pasteurize pre-packaged food at, or near room temperature, using supercritical carbon dioxide. Another aspect of the present invention is the possibility of introducing carbonation simultaneous to the pasteurization.

Illustrative embodiments of the invention are described below. While the invention is susceptible to various modifications and alternative forms, specific embodiments thereof are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

The invention discloses a method to pasteurize pre-packed food at, or, close to room temperature, using super critical CO₂. This invention eliminates the post process contamination of the food. It also combines carbonation and pasteurization as one step process.

This invention discloses a method to pasteurize or disinfect foods (liquid, semi-solid or solid) after packing, without using heat. It also provides a method to carbonate, and at the same time, inactivate microorganisms in a pre-packed pouch or container. Consumers will be able to get safe and minimally treated fresh products. This method eliminates post process contamination.

Supercritical CO₂ is well known for its ability to inactivate microorganisms. Supercritical CO₂ can be obtained by pressurizing CO₂ to about 1084 psig (around 75 atm.) and to a temperature of 31.1°C (87.9°F). This invention reveals a method to pre pack food in a polymer container or in a pouch, and then transfers the container or the pouch into a pressure vessel and pressurize the system to reaches the desired supercritical pressure. The system temperature is controlled by an external heat exchanger. By achieving the desired pressure, and temperature for given a time in a pre-defined polymer container or pouch, pasteurization of food is achieved without affecting quality.

The invention describes a method to use the supercritical CO₂ to inactivate pathogenic microorganisms in food, and at the same time, to carbonate the food if needed in a pre-packed pouch or container. Pouches or containers are made using a pre defined polymer structure such that the polymer matrix expansion under supercritical CO₂ will be controlled based on the desired outcome of the product. Food (liquid, solid or semisolid) will be packaged in such polymer container or pouch and placed in a pressure vessel. The pressure vessel will be closed and filled with CO₂ to replace air. Then the system will be pressurized using to CO₂ at or above 1040 psig (around 72 atm.). During the process, the temperature will be maintained at or above 31.1°C. The system will be held at predefined pressure temperature conditions for a predefined period of time. After that pressure is released and food will be removed from the pressure vessel.

In one embodiment of the present invention a polymer container is introduced into a pressure vessel. This polymer container is made of a material that allows carbon dioxide to permeate, while discouraging the permeation of other substances. This polymer container is pre-filled with foodstuff. This foodstuff may be a liquid, a solid, or a semi-solid. After at least one container is introduced into the pressure vessel, a carbon dioxide containing gas is introduced into the pressure vessel, thereby purging the vessel of substantially all of the air contained therein.

This carbon dioxide containing gas may be selected from the group consisting of carbon dioxide, or a mixture of carbon dioxide and an inert gas. The inert gas may be selected from the group consisting of nitrogen, argon, krypton, xenon, neon or any combination thereof. The inert gas may comprise between about 0% and about 90%, by volume, of the carbon dioxide containing gas. The inert gas may comprise between about 10% and about 70%, by volume, of the carbon dioxide containing gas.

Once substantially all of the air has been purged from the pressure vessel, additional carbon dioxide containing gas is introduced, thereby increasing the internal pressure to a first predetermined pressure. This first predetermined pressure may be about 1040 psi (about 72 atm.). This first predetermined pressure may be above about 1040 psi. This pressurized gas within the vessel is maintained at a first temperature. This first temperature may be about 87.9 F (31.1°C). This first temperature may be above about 87.9 F (31.1°C).

This pressure and temperature is maintained within the pressure vessel for a predetermined time, sufficient to allow the carbon dioxide containing gas to permeate into the polymer container and to obtain a first desired effect on the foodstuff. This predetermined time may be between about 6 seconds and about 60 minutes. This first desired effect may be the substantial pasteurization of said foodstuff. By "substantial pasteurization", as used herein, is defined as greater than a 3 log kill rate. Alternately, "substantial pasteurization" is defined as greater than a 4 log kill rate. As another alternate, "substantial pasteurization" is defined as greater than a 5 log kill rate.

The first desired effect may be the inhibition of enzymes in said foodstuff. The first desired effect may be to obtain a predetermined level of dissolved gas in said foodstuff. The predetermined level of dissolved gas may be between about 2 volumes of CO2 and about 4 volumes of CO2. The predetermined level of dissolved gas may be between about 2.2 volumes of CO2 and about 2.5 volumes of CO2.

Then the pressure is reduced in the pressure vessel to obtain a second predetermined pressure, sufficient to allow a portion of the carbon dioxide containing gas to be released from the foodstuff and then to permeate out of the polymer container. This second pressure may be about 1 atmosphere. The portion of carbon dioxide gas that is released may be between about 100% and about 10%. The portion of carbon dioxide gas that is released may be between about 90% and about 15%. The portion of carbon dioxide gas that is released may be between about 80% and about 20%.

The retained carbon dioxide is sufficient to obtain a second desired effect. This second desired effect may be to obtain a predetermined level of dissolved gas within said foodstuff. The predetermined level of dissolved gas may be between 0 volumes of CO2 and 5 volumes of CO2. The predetermined level of dissolved gas may be between about 2 volumes of CO2 and about 4 volumes of CO2. The predetermined level of dissolved gas may be between about 2.2 volumes of CO2 and about 2.5 volumes of CO2.

The invention is not limited to the preferred embodiments described above, but rather defined by the claims set forth below.

## Claims

1. A method of treating a liquid, comprising,
a. introducing a polymer container into a pressure vessel, wherein said polymer container contains foodstuff, and wherein said pressure vessel contains ambient air,
b. purging said pressure vessel by admitting sufficient carbon dioxide containing gas into said pressure vessel to displace said ambient air, and then to obtain a first predetermined pressure,
c. controlling the temperature of said pressurized carbon dioxide containing gas to a first temperature,
d. maintaining said pressure and temperature for a predetermined period of time, sufficient to allow said carbon dioxide containing gas to permeate into said polymer container and then to obtain a first desired effect on said foodstuff, and
e. controlling the pressure to obtain a second predetermined pressure, sufficient to allow a portion of the carbon dioxide containing gas to be released from said foodstuff and then to exit said polymer container.

2. The method of claim 1, further comprising;
f. retaining sufficient carbon dioxide containing gas within said foodstuff to obtain a second desired effect.

3. The method of claim 1 or 2, wherein said carbon dioxide containing gas is selected from the group consisting of carbon dioxide, or a mixture of carbon dioxide and an inert gas.

4. The method of claim 3, wherein said inert gas is selected from the group consisting of nitrogen, argon, krypton, xenon, neon, or any combination thereof.

5. The method of claim 3, wherein said inert gas comprises between about 0% and about 90%, by volume, of the carbon dioxide containing gas.

6. The method of claim 5, wherein said inert gas comprises between 10% and about 70%, by volume, of the carbon dioxide containing gas.

7. The method of claim 1, wherein said first pressure is about 1040 psi (about 72 atm.).

8. The method of claim 1, wherein said first pressure is above about 1040 psi (above about 72 atm.).

9. The method of claim 1, wherein said first temperature is about 87.9 F (31.1 °C).

10. The method of claim 1, wherein said first temperature is above 87.9 F (31.1 °C).

11. The method of claim 1, wherein said predetermined time period is between about 6 seconds and about 60 minutes.

12. The method of claim 1, wherein said first desired effect is the substantial pasteurization of said foodstuff.

13. The method of claim 1, wherein said first desired effect is the inhibition of enzymes in said foodstuff.

14. The method of claim 1, wherein said first desired effect is to obtain a predetermined level of dissolved gas in said foodstuff.

15. The method of claim 14, wherein said predetermined level of dissolved gas is between about 2 volumes of CO2 to about 4 volumes of CO2.

16. The method of claim 15, wherein said predetermined level of dissolved gas is between 2.2 volumes of CO2 and 2.5 volumes of CO2.

17. The method of claim 1, wherein said second pressure is about 1 atmosphere.

18. The method of claim 2, wherein said second desired effect is to obtain a predetermined level of dissolved gas in said foodstuff.

19. The method of claim 18, wherein said predetermined level of dissolved gas is between about 2 volumes of CO2 to about 4 volumes of CO2.

20. The method of claim 19, wherein said predetermined level of dissolved gas is between about 2.2 volumes of CO2 and about 2.5 volumes of CO2.
